# EUROPÄISCHE PATENTSCHRIFT

(11) **EP 2 881 895 B1**
(45) Veröffentlichungstag und Bekanntmachung des Hinweises auf die Patenterteilung: **31.03.2021**
(21) Anmeldenummer: 14188225.8
(22) Anmeldetag: 09.10.2014
(51) Int. Cl.: G06K 13/07, G06K 13/14

(54) **Verfahren zum Zuführen von Kartenrohlingen in eine Vorrichtung zum Bearbeiten der Kartenrohlinge**
Method for feeding card blanks into a device for processing the card blanks
Procédé destiné à alimenter en cartes vierges un dispositif destiné à traiter les cartes vierges

(30) Priorität: 05.12.2013 DE 102013113521
(43) Veröffentlichungstag der Anmeldung: 10.06.2015
(73) Patentinhaber: Bundesdruckerei GmbH, 10969 Berlin (DE)
(72) Erfinder: Baudach, Steffen, 13189 Berlin (DE)
(74) Vertreter: Mammel und Maser

(56) Entgegenhaltungen:
- EP-A2- 0 863 482
- DE-A1- 19 526 087

## Beschreibung

Die Erfindung betrifft ein Verfahren zum Zuführen von Kartenrohlingen in eine Vorrichtung zum Bearbeiten der Kartenrohlinge gemäß dem Oberbegriff des Anspruchs 1.

Aus der DE 195 26 087 A1 ist eine Vorrichtung zum Bearbeiten von Ausweiskarten bekannt, die durch eine geschlossen umlaufende Transporteinrichtung mit einer Vielzahl von Aufnahmeeinrichtungen gebildet ist und wenigstens eine Aufgabestation zum Einbringen der Ausweiskarten in die Aufnahmeeinrichtungen, wenigstens eine Entnahmestation zum Entnehmen der Ausweiskarten und wenigstens eine dazwischen liegende Bearbeitungsstation umfasst.

Bei der Herstellung von personalisierten Dokumenten, wie beispielsweise Zutrittskarten, Identitätskarten, Führerscheinen, Ausweisen und dergleichen, ist bekannt, dass Kartenrohlinge im Magazin gestapelt für eine Vorrichtung zum Bearbeiten der Kartenrohlinge bereitgestellt werden. Eine solche Vorrichtung zum Bearbeiten von Kartenrohlingen, wie beispielsweise zum Beschriften des Kartenrohlings, Beschreiben eines darin enthaltenen IC-Chips, Einbringen von weiteren Sicherheitselementen oder dergleichen, umfasst ein Transportband, um die Kartenrohlinge von einer Bearbeitungsstation zur nächsten Bearbeitungsstation zu führen. Das Magazin mit den bereitgestellten Kartenrohlingen, die alle vom gleichen Typ sind, wird stirnseitig einem endlos ausgebildeten Transportband zugeordnet. Das Transportband wird getaktet angetrieben. Während einer Verfahrbewegung des Transportbandes wird auf dem Magazin ein Kartenrohling ausgegeben und dem Transportband zugeführt.

Diese Anordnung ermöglicht, dass nur die in dem Magazin gestapelten Kartenrohlinge des gleichen Typs nacheinander dem Transportband zugeführt werden können, so dass diese auch nacheinander bearbeitet, insbesondere personalisiert, werden. Nach deren Bearbeitung werden diese aus den Kartenrohlingen hergestellten Dokumente für den Versand sortiert, um diese beispielsweise der jeweiligen Meldestelle zusenden zu können. Sofern eine Meldestelle verschiedene Dokumente anfordert, wie beispielsweise Führerscheine, Personalausweise oder dergleichen, ist es erforderlich, dass eine Zuordnung der einzelnen Dokumente erfolgt, die nur typenweise in einem Magazin bereitgestellt werden können, um diese gemeinsam an die Meldestelle weiterzuleiten. Dadurch ist der gesamte Herstellungsprozess arbeits- und zeitintensiv. Darüber hinaus können einzelne Losgrößen bei der Bearbeitung von Kartenrohlingen nicht gesondert gekennzeichnet werden, da aus dem Magazin nur ein Typ des Kartenrohlings ausgegeben wird. Das Bereitstellen von mehreren Magazinen, die gegenüber der Stirnseite des Transportbandes verfahren werden, ist grundsätzlich möglich, jedoch kann dadurch die erforderliche Taktzeit zum Zuführen der Kartenrohlinge nicht eingehalten werden.

Aus der EP 0 863 482 A2 ist eine Anlage zur Bearbeitung von Chip- und/oder Magnetstreifenkarten bekannt. Diese Anlage umfasst ein Kartenvorratsmodul, ein Kartenbearbeitungsmodul, ein Laserbearbeitungsmodul und ein Bilderkennungsmodul. Zwischen jedem der Module ist ein Kartenverteilmodul vorgesehen, durch welche die Karten jeweils von einer Station des vorangegangenen Moduls in eine Station des nachgeschalteten Moduls transportiert werden.

Der Erfindung liegt deshalb die Aufgabe zugrunde, ein Verfahren vorzuschlagen, bei welchem eine Auftragsgenerierung für eine vorbestimmte Anzahl von Dokumenten aus unterschiedlichen Kartenrohlingen und eine daran angepasste Zuführung von unterschiedlichen Kartenrohlingen ermöglicht wird.

Diese Aufgabe wird durch ein Verfahren gemäß Anspruch 1 gelöst.

Durch die Zuordnung von zumindest zwei Magazinen an einer oder beiden Längsseiten des Transportbandes können während einer Stillstandphase des Transportbandes beispielsweise gleichzeitig oder nacheinander ein oder mehrere Kartenrohlinge aus dem oder den Magazinen dem Transportband zugeführt werden, ohne dass ein Auswechseln oder Verfahren des oder der Magazine relativ zum Transportband erforderlich ist. Dieses Verfahren erhöht auch die Flexibilität bei der Auftragsgenerierung. Es können beispielsweise unterschiedliche Dokumente nacheinander dem Transportband zugeführt und bearbeitet, insbesondere personalisiert, werden, so dass diese unterschiedlichen Dokumente als eine Versandeinheit für eine Meldestelle nach dem Bearbeiten zusammengefasst werden können. Dadurch wird nach dem Bearbeiten der Kartenrohlinge zu Dokumenten eine Vereinfachung erzielt, da eine Zuordnung oder Sortierung für einen bestimmten Versandort einer Meldestelle nicht mehr notwendig wird. Des Weiteren ist dadurch ermöglicht, dass bei der Herstellung von Aufträgen von einem Los von beispielsweise 100, 500 oder 1000 gleichen Kartenrohlingen eine beliebig festgelegte Trennkarte eingebracht werden kann, um beispielsweise den Beginn und/oder das Ende des Auftrags zu kennzeichnen oder weitere Informationen über den Auftrag auf die Trennkarte aufzubringen.

Bei dem Verfahren sind die Magazine bevorzugt unmittelbar einer Längsseite des Transportbandes zugeordnet, so dass mit einer Schiebereinrichtung eine direkte und unmittelbare Zuführung des Kartenrohlings ermöglicht wird. Dadurch können hohe Zuführgeschwindigkeiten erzielt und kurze Taktzeiten ermöglicht werden. Die Magazine können dabei innerhalb der Vorrichtung benachbart zur Bearbeitungsstation positioniert werden. Alternativ kann das Transportband gegenüber der Vorrichtung auch herausgeführt sein, so dass in diesem Bereich außerhalb der Vorrichtung die Magazine zum Transportband positioniert werden können.

Bei dem Verfahren zum Bearbeiten der Kartenrohlinge wird bevorzugt für den Kartenrohling des ersten Typs eine Trägeranordnung aus zumindest zwei Schichten mit vorzugsweise zumindest einem dazwischen liegenden IC-Chip und einer Transpondereinheit eingesetzt.

Als Kartenrohling des zumindest einen weiteren Typs wird beispielsweise ein Kartenrohling abweichend zum ersten Typ oder eine Leerkarte eingesetzt werden, um das Ende eines Auftrags beziehungsweise den Beginn des nächsten Auftrags zu signalisieren. Diese Leerkarte kann von der Vorrichtung zur Bearbeitung der Kartenrohlinge erkannt werden, so dass beim Positionieren einer solchen Leerkarte in einer Bearbeitungsstation ein Bearbeitungsprozess unterbleibt. Eine solche Leerkarte kann auch zusätzlich beschriftet oder gekennzeichnet werden, um für den Versand entsprechende Informationen bereitzustellen. Alternativ kann der Kartenrohling des weiteren Typs auch eine Trägeranordnung, vorzugsweise mit einem IC-Chip, sein, die jedoch von dem ersten Typ im Format und/oder Aufbau und/oder Material der Schichten abweicht. So kann beispielsweise innerhalb eines Auftrags der erste Typ eine Datenseite für ein Passbuch umfassen und der zweite Typ für einen Führerschein oder eine Zutrittskarte vorgesehen sein.

Nach einer bevorzugten Ausgestaltung des Verfahrens wird zum Abarbeiten eines Auftrags zur Kennzeichnung des Beginns und/oder des Endes des Auftrages eine Leerkarte oder Trennkarte zugeführt. Dies erfolgt über eine Steuerungseinrichtung in Abhängigkeit des generierten Auftrages.

Alternativ kann vorgesehen sein, dass die Steuerungseinrichtung einen Kartenrohling des ersten oder weiteren Typs als Beginn eines Auftrages bestimmt und/oder das Ende des Auftrags durch einen Kartenrohling des ersten oder weiteren Typs bestimmt wird. Dadurch können die zum Transportband zugeordneten Magazine alle für die Bearbeitung der Kartenrohlinge eingesetzt werden, ohne dass ein oder mehrere Magazine für die Bereitstellung von Leer- oder Trennkarten verwendet wird.

Bevorzugt wird das zumindest eine Magazin zur Entnahme des Kartenrohlings des ersten und/oder des weiteren Typs mit einer Taktung von wenigstens einer Karte pro Sekunde angesteuert. Aufgrund der stationären Positionierung der Magazine seitlich zum Transportband können solche kurze Taktzeiten in mechanisch einfacher Weise erzielt werden, wodurch der Automatisierungsgrad und die Produktivität erhöht werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht von oben auf eine Vorrichtung zum Bearbeiten von Kartenrohlingen mit einer aus dem Stand der Technik bekannten Zuführung und
Figur 2 eine schematische Ansicht von oben auf eine erfindungsgemäße Vorrichtung zum Bearbeiten der Kartenrohlinge.

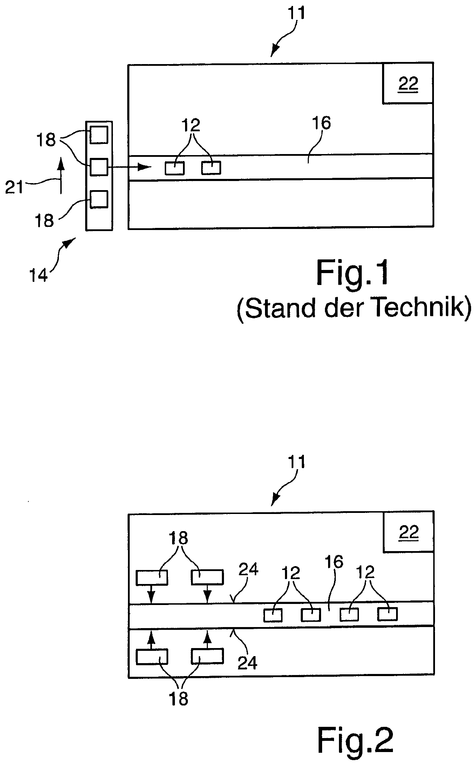

In Figur 1 ist eine schematische Ansicht von oben auf eine Vorrichtung 11 zum Bearbeiten von Kartenrohlingen 12 mit einer Zuführeinrichtung 14 gemäß dem Stand der Technik dargestellt. Die Vorrichtung zum Bearbeiten von Kartenrohlingen 12 umfasst ein Transportband 16, welches die Kartenrohlinge 12 durch eine oder mehrere nicht näher dargestellte Bearbeitungsstationen der Vorrichtung 11 hindurchführt, in denen beispielsweise Kartenrohlinge durch Bedrucken und/oder Laserbearbeitung beschriftet und/oder gekennzeichnet werden, IC-Chips programmiert werden und/oder Sicherheitsmerkmale in die Kartenrohlinge eingebracht werden können.

Die Kartenrohlinge 12 werden in einem Magazin 18 gestapelt der Zuführeinrichtung 14 bereitgestellt und zur Stirnseite des Transportbandes 16 positioniert, so dass die Kartenrohlinge 12 nacheinander in Längsrichtung des Transportbandes 16 aus dem Magazin 18 entnommen und auf dem Transportband 16 aufgelegt werden können. In dem Magazin 18 sind nur Kartenrohlinge 12 des gleichen Typs bevorratet. Sobald ein Magazin 18 vollständig entleert wurde, wird dieses durch eine Fahrbewegung gemäß Pfeil 21 weiter getaktet, so dass das nachfolgende und gefüllte Magazin 18 der Entnahmeposition zum Zuführen der Kartenrohlinge 12 zum Transportband 16 positioniert wird.

Die Zuführung der Kartenrohlinge 12 erfolgt während einer Verfahrbewegung des Transportbandes 16, wobei das Transportband 16 der Vorrichtung zum Bearbeiten der Kartenrohlinge 12 getaktet mit einer Steuerungseinrichtung angesteuert wird.

In Figur 2 ist eine schematische Ansicht von oben auf die Vorrichtung 11 zum Bearbeiten der Kartenrohlinge 12 mit der erfindungsgemäßen Zuführung dargestellt. Bei dieser Zuführung sind die Magazine 18 einer oder beiden Längsseiten 24 des Transportbandes 16 beispielsweise mit einer Schiebereinrichtung zugeordnet, um die Kartenrohlinge 12 auf das Transportband 16 überzuführen. Beispielsweise können entlang einer Längsseite 24 zwei oder mehrere Magazine 18 vorgesehen sein. Ebenso kann beispielsweise jeweils ein Magazin 18 jeweils einer Längsseite 24 des Transportbandes 16 zugeordnet sein. Bei mehr als zwei Magazinen 18 kann eine wahlweise Kombination und/oder Anordnungsmöglichkeit der Magazine 18 zu den Längsseiten 24 gegeben sein. In jedem Magazin 18 ist ein Typ eines Kartenrohlings 12 gestapelt und bereitgestellt.

Durch diese Anordnung der Magazine 18 wird eine flexible Auftragsgenerierung ermöglicht, das heißt, dass beispielsweise bei Express- oder Eilaufträgen von gleichen oder unterschiedlichen Dokumenten aus einer Bestellung, insbesondere der Bereitstellung von Meldestellen, diese nacheinander bearbeitet werden können. Durch eine Steuerungseinrichtung 22 wird eine flexible Ansteuerung der einzelnen Magazine 18 ermöglicht, so dass wahlweise unterschiedliche Typen von Kartenrohlingen für die Abarbeitung des Auftrages bereitgestellt werden können.

Der Kartenrohling 12 eines ersten Typs kann beispielsweise die Trägeranordnung umfassen, welche aus wenigstens zwei Schichten mit einem vorzugsweise dazwischen angeordneten IC-Chip oder einer Transpondereinheit besteht. Ebenso kann die Trägeranordnung als zumindest eine Schicht mit einer darauf aufgebrachten Zwischenlage ausgebildet sein, welche beispielsweise ein Fenster zur Aufnahme eines IC-Chips umfasst. Ebenso können auch Trägeranordnungen aus einer oder mehreren Schichten ohne elektronische Komponenten vorgesehen sein. Der Kartenrohling 12 des zumindest einen weiteren Typs ist abweichend zum ersten Typ ausgebildet. Die Abweichung kann sowohl im Aufbau und/oder der verwendeten Komponenten und/oder im Format und/oder in der Verwendung von unterschiedlichen Materialien sein. Bevorzugt sind die Kartenrohlinge 12 unpersonalisiert.

Durch das Verfahren zum Zuführen von Kartenrohlingen 12 ist beispielsweise folgender Arbeitsablauf möglich:

Ein Auftrag zur Personalisierung von Kartenrohlingen 12 für ein personalisiertes Dokument umfasst beispielsweise ein Los von tausend Dokumenten, wobei zwischen den einzelnen Aufträgen eine Leer- oder Trennkarte eingesetzt werden soll, um den Beginn oder das Ende des jeweiligen Auftrags zu kennzeichnen. Auf die Trennkarte können vorzugsweise ergänzend während dem Durchlaufen der Vorrichtung 12 Kenndaten und/oder Kennzahlen für den Auftrag aufgedruckt werden. Zunächst werden durch das erste Magazin 18 die unpersonalisierten Kartenrohlinge 12 dem Transportband 16 zugeführt. Nachdem die vorbestimmte Anzahl der Kartenrohlinge 12 zugeführt ist, wird aus einem zweiten Magazin 18 eine Leerkarte ausgegeben, so dass daraufhin in der Vorrichtung 11 erkannt werden kann, dass der Auftrag zu Ende ist. Dementsprechend wird am Ende des Transportbandes 16 ein entsprechend weiteres nicht näher dargestelltes Magazin angesteuert, welches nach Aufnahme der Dokumente und der Trennkarte diesen Stapel für den weiteren Versand bereitstellt. Bei diesem Beispiel kann vorgesehen sein, dass die weiteren in Figur 2 dargestellten Magazine ebenso Kartenrohlinge 12 umfassen, so dass eine kontinuierliche Taktung des Transportbandes ermöglicht ist und nach dem Abarbeiten eines der Magazine 18 ein Austausch erfolgen kann, ohne dass der Prozess unterbrochen wird.

Ein alternatives Verfahren sieht vor, dass innerhalb eines Auftrages verschiedene Typen von Kartenrohlingen, wie beispielsweise Zutrittskarten, Führerscheine und Ausweise, zu personalisieren sind. Dementsprechend wird ein Magazin mit Kartenrohlingen für die Führerscheine und das weitere Magazin mit Kartenrohlingen für die Zutrittskarte sowie das dritte Magazin mit Kartenrohlingen für die Ausweise bestückt, so dass entsprechend dem Auftrag die bestellte Anzahl der einzelnen Dokumente in der vorgegebenen Reihenfolge aus dem Magazinen ausgegeben und dem Transportband zugeführt werden können. Zusätzlich kann, sofern dies bei der Auftragsgenerierung vorgesehen ist, in weiteren Magazinen 18 auch noch eine Leerkarte oder Trennkarte zum Beginn oder am Ende des Auftrages dem Transportband 16 zugeführt werden. Die Anzahl und/oder Anordnung der in Figur 2 dargestellten Magazine 18 ist nur beispielhaft und nicht darauf beschränkt.

## Patentansprüche

1. Verfahren zum Zuführen von Kartenrohlingen (12) in eine Vorrichtung (11) zum Bearbeiten von Kartenrohlingen (12), bei dem mehrere Kartenrohlinge (12) eines ersten Typs mit zumindest einem Magazin (18) bereitgestellt werden, bei dem die Kartenrohlinge (12) vereinzelt aus dem Magazin (18) entnommen und einem Transportband (16) zugeführt werden, welches getaktet angetrieben wird und die zumindest eine Vorrichtung (11) durchläuft, **dadurch gekennzeichnet, dass** an einer oder beiden Längsseiten (24) des Transportbandes (16) das zumindest eine Magazin (18) mit Kartenrohlingen (12) des ersten Typs und zumindest ein weiteres Magazin (18) mit Kartenrohlingen (12) eines weiteren Typs zugeordnet werden, dass in einer Stillstandphase des getakteten Transportbandes (16) ein oder mehrere Kartenrohlinge (12) aus dem oder den Magazinen (18) dem Transportband (16) zugeführt werden und dass zum Abarbeiten eines Auftrags, eine Reihenfolge der Kartenrohlinge (12) für die Zuführung der Vorrichtung (11) festgelegt wird und die Magazine (18) zur Entnahme der jeweiligen Kartenrohlinge (12) durch eine Steuerungseinrichtung (22) entsprechend der festgelegten Reihenfolge angesteuert werden.

2. Verfahren nach Anspruch 1, **dadurch gekennzeichnet, dass** die Magazine (18) unmittelbar einer Längsseite (24) des Transportbandes (16) zugeordnet und die Kartenrohlinge (12) mit einer Schiebereinrichtung dem Transportband (16) zugeführt werden.

3. Verfahren nach Anspruch 1, **dadurch gekennzeichnet, dass** als Kartenrohling (12) des ersten Typs eine Trägeranordnung aus wenigstens zwei Schichten eingesetzt wird.

4. Verfahren nach Anspruch 3, **dadurch gekennzeichnet, dass** als Kartenrohling (12) des ersten Typs eine Trägeranordnung aus wenigstens zwei Schichten mit einem dazwischen liegenden IC-Chip eingesetzt wird.

5. Verfahren nach Anspruch 4, **dadurch gekennzeichnet, dass** der IC-Chip für eine Personalisierdatenseite eingesetzt wird.

6. Verfahren nach Anspruch 1, **dadurch gekennzeichnet, dass** als Kartenrohling (12) des zumindest einen weiteren Typs ein von dem ersten Typ abweichenden Kartenrohling (12) eine Leerkarte oder eine Trägeranordnung aus wenigstens zwei Schichten ohne elektronische Komponente eingesetzt werden.

7. Verfahren nach Anspruch 1, **dadurch gekennzeichnet, dass** zum Abarbeiten des Auftrages bestehend aus mehreren Kartenrohlingen (12) vor dem Beginn des ersten zu bearbeitenden Kartenrohlings (12) und/oder am Ende nach dem letzten zu bearbeitenden Kartenrohling (12) eine Leerkarte zugeführt wird.

8. Verfahren nach Anspruch 1, **dadurch gekennzeichnet, dass** zum Abarbeiten des Auftrags der erste und der letzte Kartenrohling (12) als Beginn und/oder Ende des Auftrags bestimmt werden.

9. Verfahren nach Anspruch 1, **dadurch gekennzeichnet, dass** das zumindest eine Magazin (18) zur Entnahme der Kartenrohlinge (12) mit einer Taktung zur Ausgabe der Kartenrohlinge von wenigstens einem Kartenrohling (12) pro Sekunde angesteuert wird.

## Claims

1. A method for feeding card blanks (12) into a device (11) for processing card blanks (12) wherein several card blanks (12) of a first type are provided using at least one hopper (18), wherein the card blanks (12) are withdrawn one by one from the hopper (18) and supplied to the transport belt (16) which is driven in a cycled manner and passes through the at least one device (11), **characterised in that** the at least one hopper (18) containing card blanks (12) of the first type and at least one further hopper (18) containing card blanks (12) of another type are associated with the transport belt (16) on one or both longitudinal sides (24) thereof, **in that** during a standstill phase of the transport belt (16), one or several card blanks (12) withdrawn from the hopper (s) (18) are supplied to the transport belt (16), **in that** for processing a job, a sequence is determined in which the card blanks (12) are to be supplied to the device (11) and **in that** the hoppers (18) are activated in accordance with the determined sequence by means of a control device (22) so as to permit the withdrawal of the respective card blanks (12) .

2. The method as claimed in claim 1, **characterised in that** the hoppers (18) are directly associated with a longitudinal side (24) of the transport belt (16) and **in that** the card blanks (12) are supplied to the transport belt (16) by means of a pusher device.

3. The method as claimed in claim 1, **characterised in that** a support assembly consisting of at least two layers is used as a card blank (12) of the first type.

4. The method as claimed in claim 3, **characterised in that** a support assembly consisting of at least two layers and including an IC chip interposed therebetween is used as a card blank (12) of the first type.

5. The method as claimed in claim 4, **characterised in that** said IC chip is used for a personalisation data page.

6. The method as claimed in claim 1, **characterised in that** a card blank (12) differing from the first type, a blank card or a support assembly consisting of at least two layers devoid of an electronic component is used as a card blank (12) of the at least one further type.

7. The method as claimed in claim 1, **characterised in that** for processing a job consisting of several card blanks (12), a blank card is supplied at the beginning, before the first card blank (12) to be processed, and/or at the end, after the last card blank (12) to be processed.

8. The method as claimed in claim 1, **characterised in that** for processing the job, the first and the last card blank (12) are specified as the beginning and/or the end of the job.

9. The method as claimed in claim 1, **characterised in that** the at least one hopper (18) from which the card blanks (12) are withdrawn is activated with a card blank delivery clock rate of at least one card blank (12) per second.

## Revendications

1. Procédé permettant d'amener des cartes vierges (12) dans un dispositif (11) destiné à usiner des cartes vierges (12), lors duquel plusieurs cartes vierges (12) d'un premier type sont fournies par au moins un magasin (18), lors duquel les cartes vierges (12) sont prélevées du magasin (18) de manière individuelle et sont amenées à une bande transporteuse (16) à marche cadencée qui traverse ledit au moins un dispositif (11), **caractérisé en ce que** ledit au moins un magasin (18) contenant des cartes vierges (12) du premier type et au moins un autre magasin (18) contenant des cartes vierges (12) d'un autre type sont affectés à un seul ou aux deux côtés longitudinaux (24) de la bande transporteuse (16), qu'une ou plusieurs cartes vierges (12) provenant du ou des magasins (18) sont amenées à la bande transporteuse (16) pendant que ladite bande transporteuse (16) à marche cadencée se trouve dans une phase d'arrêt et **en ce qu'**un ordre suivant lequel les cartes vierges (12) sont amenées au dispositif (11) est déterminé en vue du déroulement d'une tâche donnée et **en ce que**, en vue du prélèvement des cartes vierges respectives (12), les magasins (18) sont activés par un dispositif de commande (22) selon l'ordre déterminé.

2. Procédé selon la revendication 1, **caractérisé en ce que** les magasins (18) sont affectés directement à un côté longitudinal (24) de la bande transporteuse (16) et que les cartes vierges (12) sont amenées à la bande transporteuse (16) grâce à un dispositif pousseur.

3. Procédé selon la revendication 1, **caractérisé en ce qu'**un assemblage porteur constitué d'au moins deux couches est utilisé en tant que carte vierge (12) du premier type.

4. Procédé selon la revendication 3, **caractérisé en ce qu'**un assemblage porteur constitué d'au moins deux couches présentant une puce IC placée entre elles est utilisé en tant que carte vierge (12) du premier type.

5. Procédé selon la revendication 4, **caractérisé en ce que** la puce IC est utilisée pour une page de données de personnalisation.

6. Procédé selon la revendication 1, **caractérisé en ce qu'**une carte vierge (12) qui diffère de celle du premier type, une carte vide ou un assemblage porteur constitué d'au moins deux couches sans composant électronique est utilisé(e) en tant que carte vierge (12) dudit au moins un autre type.

7. Procédé selon la revendication 1, **caractérisé en ce que**, pour le déroulement de la tâche comprenant plusieurs cartes vierges (12), une carte vide est placée au début, devant la première carte vierge (12) à usiner, et à la fin, après la dernière carte vierge (12) à usiner.

8. Procédé selon la revendication 1, **caractérisé en ce que**, pour le déroulement de la tâche, la première et la dernière carte vierge (12) sont déterminées comme étant le début et/ou la fin de la tâche.

9. Procédé selon la revendication 1, **caractérisé en ce que** pour le prélèvement des cartes vierges (12), ledit au moins un magasin (18) est activé avec une cadence de sortie des cartes vierges (12) qui est d'au moins une carte vierge (12) par seconde.
